# EUROPEAN PATENT SPECIFICATION

(11) **EP 3 558 898 B1**
(45) Date of publication and mention of the grant of the patent: **21.06.2023**
(21) Application number: 17835729.9
(22) Date of filing: 21.12.2017
(51) Int. Cl.: C05D 9/00, C05F 3/00

(54) **BIOCARBON REGENERATION AND / OR FERTILIZER SUBSTRATE**
BIOKOHLENSTOFFREGENERIERUNG UND/ODER DÜNGEMITTELSUBSTRAT
PRODUIT DE RÉGÉNÉRATION DE BIOCARBONE ET/OU SUBSTRAT D'ENGRAIS

(30) Priority: 22.12.2016 SK PP1142016; 22.12.2016 SK PV1482016 U
(43) Date of publication of application: 30.10.2019
(73) Proprietor: Zdroje Zeme A.S., 900 27 Bernolákovo (SK)
(72) Inventor: MARYNCÁK, Miroslav, 900 25 Chorvátsky Grob (SK); KRÁLIK, Peter, 010 04 Zilina (SK)
(74) Representative: Jeck, Anton
(86) International application number: PCT/SK2017/000012
(87) International publication number: WO 2018/117980

(56) References cited:
- AU-A4- 2009 101 249
- US-A1- 2014 352 378
- Lopez-Cano et al.: "Effect of biochar on the N mineralization dynamics of an agricultutal soil amended with sheep manure", , 16 December 2014 (2014-12-16), XP055464849, Retrieved from the Internet: URL:https://www.researchgate.net/profile/I nes_Lopez-Cano/publication/269629045_Effec t_of_biochar_on_the_N_mineralization_dynam ics_of_an_agricultural_soil_amended_with_s heep_manure/links/549007790cf225bf66a80cbb /Effect-of-biochar-on-the-N-mineralization -dynamics-of-an-agricultural-soil-amended- with-sheep [retrieved on 2018-04-05]
- LÓPEZ-CANO INÉS ET AL: "Biochar improves N cycling during composting of olive mill wastes and sheep manure", WASTE MANAGEMENT, vol. 49, 8 January 2016 (2016-01-08), pages 553-559, XP029452410, ISSN: 0956-053X, DOI: 10.1016/J.WASMAN.2015.12.031
- ARIF MUHAMMAD ET AL: "Integration of biochar with animal manure and nitrogen for improving maize yields and soil properties in calcareous semi-arid agroecosystems", FIELD CROPS RESEARCH, ELSEVIER, AMSTERDAM, NL, vol. 195, 16 June 2016 (2016-06-16), pages 28-35, XP029625395, ISSN: 0378-4290, DOI: 10.1016/J.FCR.2016.05.011

## Description

### Technical field

The invention relates to the composition of the biocarbon regeneration and / or fertilizer substrate according to claim 1 in order to exploit the excellent effects of sheep manure in conjunction with the blocarbon properties. The invention falls within the field of agriculture, utilization of biodegradable municipal waste and fertilizers.

### Existing state of art

It is generally known that one agent for soil regeneration and fertilization is manure. A 100% organic sheep bio-fertiltzer is known, produced from matured sheep manure. Sheep manure is attainable with difficulties, but by Its properties and content of nutrients is unique in the world. Laboratory tests as well as real results have confirmed that the organic fertilizer made of sheep manure is unique in the world and justly has earned the attribute "miraculous", it significantly improves the fertility of the soil. The content of this fertilizer is very valuable humus that greatly influences the quality of soil. It dehydrates the soil and completely changes the structure and porosity. Soil nourished by sheep fertilizer becomes a diametrically different environment for growth and life of plants. Currently, most of the cultivated soils for the cultivation of plants are in poor condition. The soil properties are significantly deteriorated by long-term chemical fertilization. Fertility rapidly decreases in Western countries, and this condition is alarming. It Is compensated by regular chemical spraying and nutrition. This Is, however, a way that significantly Impairs the quality of the crop. If there is a requirement to cultivate a quality and healthy fruit. It is necessary to revive and heal the environment in which the plant lives, i.e. soil. Great results have been achieved just by this fertilizer. It is used for soil preparation, for basic fertilization before planting, for fertilization during the whole vegetation period - of room and balcony plants, perennials, annuals, vegetables, fruits, potatoes, grapevine, cereals, ornamental trees and shrubs, etc.
The substantial drawback of these fertilizers is their relatively rapid surface washout or escape into the lower soil layers under the root systems of plants under intensive irrigation or raining season.

The above described drawback is eliminated by industrial fertilizers on N-P-K basis with gradual nutrient release. Fertilizer granules are coated with a vegetable-based bitumen coating in the production which regulates nutrient release while protecting plant roots from salt build-up. Fertilizer granules continuously release nutrients during the effect time. The emptied bitumen coating is later decomposed and enriches the organic matter content of the soil. In each granule, we find all the macro and micro elements necessary for the plants. After application, soil moisture penetrates the bitumen coating and dissolves solid nutrients that are continuously released into the soil. The rate of nutrient release depends only on the temperature of the soil, at higher temperatures the nutrients are released more rapidly, at lower temperatures the release slows down and the effect time is prolonged.

The second known agent for soil regeneration and fertilization is biocarbon. Many scientific studies point to the beneficial effect of biocarbon applied to the soil to increase the carbon sequestration in the soil, but also to reduce CO₂ emissions Into the atmosphere. From the point of view of sustainable land management, the balanced balance of organic matter is essential and so new resources must be sought. One of the possible and innovative solutions can be also the application of biocarbon, which is a significant source of stable organic matter (Fischer and Glaser 2012; Purakayastha et al., 2015).

Biochar (or biocarbon) is a product that is produced by the heat treatment of organic matter without access or with limited access to oxygen by so-called pyrolysis, or gasification. The relative amount and properties of each biochar depend on production conditions, such as gasification temperature, length and pressure (Schimmelpfennig and Glaser, 2012). The properties of the raw material have fundamental influence on the blochar properties (Purakayastha et al., 2015). For example, biochar made of corn is rich in N and P and has a relatively high potential for increase in soil fertility. Corn is also characterized by higher stability of carbonaceous material which is of considerable Importance for C retention. On the other hand, bark, as noted by these authors, is of alkaline nature and, in the long run, can increase pH values from neutral to even alkaline range. Biochar produced from rice straw, to the contrary in comparison with biochar made of corn, is characterized by a relatively higher content of labile C which contributes to increase in microbial activity in soils, and so biochar produced from rice straw may be beneficial for restoring biological fertility of the soil. Biochar produced from wheat straw is rich in K and is suitable to be applied particularly for soils with K deficit and under cultures with increased demands on this nutrient.
A source of biocarbon is also processed biodegradable municipal waste, including kitchen biowaste generated in households and catering facilities, in compliance with the rules laid down in Commission Regulation (EC) No 1774/2002. These are residues from cleaning of fruits and vegetables, residues of cooked meals, etc. From the quantitative point of view, kitchen and restaurant biowaste is the most important component of mixed municipal waste.
Also carbonized wood waste, such as tree chips, which is biosource of a very high quality, falls under the term biocarbon.
Based on the above stated, efforts have been made to solve this problem, and the result of this effort is a proposal for the composition of the biocarbon regeneration and / or fertilizer substrate according to the present invention.

LOPEZ-CANO INES ET AL. "Effect of biochar on the N mineralization dynamics of an agricultutal soil amended with sheep manure", Conference paper, June 2013 discloses to treat soil with a combination of 1% sheep manure and 1% biochar from woodwaste.

LOPEZ-CANO INES ET AL: "Bio char improves N cycling during composting of olive mill wastes and sheep manure", Waste Management, vol. 49, pages 553-559 discloses a composition comprising about 46% of olive mill waste, about 54% of sheep manure and about 4% of biochar. ARIF MUHAMMAD ET AL: "Integration of biochar with animal manure and nitrogen for improving maize yields and soil properties in calcareous semi-arid agroecosys-tems", Field Crops Research, vol. 195, pages 28-35 discloses a fertiliser obtained from a mixture comprising sheep manure and olive mill waste and biochar.
AU 2009 101 249 A4 and US 2014/352378 A1 disclose the application of mixtures of biochar an animal manure to soil

### Substance of the Invention.

The above mentioned drawbacks are substantially eliminated by biocarbon regeneration and / or fertilizer substrate according to the present invention. The substance of the biocarbon regeneration and / or fertilizer substrate consists in its composition, wherein it contains sheep manure in an amount of 20 to 80 wt% and carbonized biocarbon from biodegradable municipal waste in an amount of 20 to 80 wt%. The third component is in addition the non-carbonized separation from industrial and / or plant production in an amount of up to 33 wt% whereby non-carbonized separation from industrial production is pulp or zero fibres and the non-carbonized separation from plant production is cut-offs from agricultural crops as sugar beet, cabbage, and the like.

The advantages of the biocarbon regeneration and I or fertilizer substrate according to the invention are apparent from the effects manifested on the outside. In general, it may be stated that biocarbon regeneration and I or fertilizer substrate is a result of research, the originality of which consists in connection of sheep manure and biocarbon, whereby biocarbon may be also processed biodegradable municipal waste in the hygienisation stage, meeting the requirement of the Regulation No 1774/2002.

Application of biochar into soil has agronomic advantages as pH neutralization of acidic soils. Since biochar has a high specific surface, after its application It comes to better management with organic matter and nutrients in soil. Biochar contains ash matter which is a valuable source of biogenic elements for plants, such as K, Ca a Mg. Application of biochar produced from rice chaff significantly increased the N, P and K content in the soil. The porous biochar structure provides life space to soil microorganisms, resulting in their increased activity. Biochar has a positive effect on mycorrhizal fungi. As a result of its application, their colonies significantly Increase, which is positively reflected also in the availability of nutrients, such as P. Application of biochar can be an effective tool to reduce the negative effects of Al toxicity in soils with light grain. It participates in the detoxification of pesticide residues and washout of nutrients into groundwater, which improves the quality of the environment. Biochar can also be used for soil sanitation, e.g. for heavy metals. It may also influence the elimination of pathogens in the soil. Applied biochar improves physical properties of soils. It increases retention water capacity values, Increases the overall porosity and reduces volumetric weight values of soil. Biochar also positively affects crop-producing parameters of crop plants.

### The examples of embodiments

It is understood that the individual embodiments according to the invention are intended to be illustrative and not limiting technical solutions. Those skilled in the art will find or will be able to ascertain, using no more than routine experimentation, many equivalents to the specific embodiments of the invention. Also such equivalents will fall within the scope of the following claims. For those skilled in the art, It would be no problem to make an optimal design of the mixture and a selection of its components. For this reason, these features have not been addressed in detail.

### Example 1 (comparative)

In this example of a particular embodiment, the first composition of mixture of the biocarbon regeneration and / or fertilizer substrate is described. It is a two-component fertilizer substrate containing sheep manure in an amount of 80 wt% and carbonized biocarbon from biodegradable municipal waste in an amount of 20 wt%.

### Example 2 (comparative)

In this example of a particular embodiment, the second composition of mixture of the biocarbon regeneration and / or fertilizer substrate is described. It is a two-component fertilizer and regeneration substrate containing sheep manure in an amount of 50 wt% and carbonized biocarbon from wood waste, such as tree chips, in an amount of 50 wt%.

### Example 3

in this example of a particular embodiment, the third composition of mixture of the biocarbon regeneration and / or fertilizer substrate according to the invention is described. It is a three-component fertilizer substrate, where to the two-component biocarbon substrate according to Example 1, additionally a third component in an amount of 20 wt% of non-carbonized separation from industrial production is added, which is pulp or zero fibres.

### Example 4

In this example of a particular embodiment, the fourth composition of mixture of the biocarbon regeneration and I or fertilizer substrate according to the invention is described. It is a three-component fertilizer substrate, where to the two-component biocarbon substrate according to Example 1, additionally a third component in an amount of 33 wt% of non-carbonized separation from plant production is added, which is cut-offs from agricultural crops as sugar beet, cabbage, and the like.

### Example 5 (comparative)

In this example of a particular embodiment, the fifth composition of mixture of the biocarbon regeneration and / or fertilizer substrate is described. It is a two-component regeneration substrate containing sheep manure in an amount of 20 wt% and carbonized biocarbon from biodegradable municipal waste in an amount of 80 wt%.

### Industrial usability

The industrial usability according to the Invention Is especially in the field of agriculture.

## Claims

1. Biocarbon regeneration and/or fertilizer substrate,
**characterised in**
**that** it contains a mixture of
- sheep manure in an amount of 20 to 80 wt% and carbonized biocarbon from biodegradable municipal waste in an amount of 20 to 80 wt% and
- non-carbonized separation from industrial production in the form of pulp or zero fibers and / or plant production in the form of cut-offs from agricultural crops in an amount of up to 33 wt%.

## Patentansprüche

1. Biokohlenstoff-Regenerations- und/oder Düngemittelsubstrat,
**gekennzeichnet durch**
eine Mischung aufweisend
- Schafsmist in einer Menge von 20 bis 80 Gew.-% und karbonisiertem Biokohlenstoff aus biologisch abbaubaren Kommunalabfällen in einer Menge von 20 bis 80 Gew.-% und
- nicht karbonisierte Abtrennungen aus der industriellen Produktion in Form von Zellstoff oder Nullfasern und / oder der pflanzlichen Produktion in Form von Abfällen aus landwirtschaftlichen Kulturen in einer Menge von bis zu 33 Gew.-%.

## Revendications

1. Substrat de régénération de biocarburants et/ou de fertilisants présentant une composition
- d'excrément en une quantité de 20 jusqu'à 80 de poids en % et de biocarburant carbonisé provenant de déchets communaux biodégradables en une quantité de 20 jusqu'à 80 de poids en % et
- de séparations non carbonisées de la production industrielle de pâte à papier ou zéro fibre et/ou de production végétale sous forme de résidus issus de cultures agricoles en une quantité de et jusqu'à 33 de poids en -%.
